(19) Europäisches Patentamt / European Patent Office / Office européen des brevets

(11) **EP 3 093 486 B1**

(12) **EUROPEAN PATENT SPECIFICATION**

(45) Date of publication and mention of the grant of the patent:
**13.05.2020 Bulletin 2020/20**

(51) Int Cl.:
**F03D 17/00** *(2016.01)*

(21) Application number: **16169269.4**

(22) Date of filing: **12.05.2016**

(54) **COMPUTING SYSTEM, WIND POWER GENERATING SYSTEM, AND METHOD OF CALCULATING REMAINING LIFE OR FATIGUE DAMAGE OF WINDMILL**

RECHNERSYSTEM, WINDKRAFTERZEUGUNGSSYSTEM UND VERFAHREN ZUR BERECHNUNG DER VERBLEIBENDEN LEBENSDAUER ODER DER ERMÜDUNGSBESCHÄDIGUNG EINER WINDMÜHLE

SYSTÈME INFORMATIQUE, SYSTÈME DE GÉNÉRATION D'ÉNERGIE ÉOLIENNE ET PROCÉDÉ DE CALCUL DE DURÉE DE VIE RESTANTE OU D'ENDOMMAGEMENT PAR FATIGUE D'ÉOLIENNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.05.2015 JP 2015098687**

(43) Date of publication of application:
**16.11.2016 Bulletin 2016/46**

(73) Proprietor: **Hitachi, Ltd.**
**Tokyo 100-8280 (JP)**

(72) Inventor: **NORIO, Takeda**
**Tokyo, 100-8280 (JP)**

(74) Representative: **MERH-IP Matias Erny Reichl Hoffmann**
**Patentanwälte PartG mbB**
**Paul-Heyse-Strasse 29**
**80336 München (DE)**

(56) References cited:
**EP-A2- 2 108 830          WO-A1-2010/069318**
**DE-A1-102005 011 256     US-A1- 2014 088 888**
**US-A1- 2014 288 855**

**Description**

Technical Field

The present invention relates to a computing system, a wind power generating system, and a method of calculating the remaining life or the fatigue damage quantity of a windmill.

Background Art

To ensure their stable operation, windmills are generally subjected to three major types of measurement:

supervisory control and data acquisition (SCADA), condition monitoring system (CMS), and structural health monitoring (SHM). Supervisory control and data acquisition (SCADA) involves measuring diverse physical quantities such as wind velocity, wind direction, power generation amount, generator revolutions, and temperature with a view to suitably controlling the windmill under the known environmental and operational conditions. Condition monitoring system (CMS) involves detecting preliminary signs of windmill failure so as to minimize the damage caused by an eventual failure. Structural health monitoring (SHM) involves measuring the distortion of the structures involved in order to evaluate the soundness of windmill blades, for example.

Patent Document 1 discloses techniques for acquiring cumulative stress based on the parameters regarding the operating environment such as wind direction and wind velocity, or their converted or equivalent values.
Patent Document 2 discloses techniques for measuring the stress or distortion exerted on the blades and estimating their life on the basis of the cumulative measured data. Patent Document 3 relates to providing an estimate of remaining lifetime of a component in a wind turbine. This may comprise providing a model for the component, obtaining a sensor signal, and determining an estimate of remaining lifetime of the component based on the model and the sensor signal. Patent Document 4 discloses estimating remaining lifetime of a component of a wind turbine based on several inputs and a correction based on actual load and distortion data.

Prior Art Documents

Patent Documents

Patent Document 1: JP-2010-79685-A
Patent Document 2: JP-2004-301030-A
Patent Document 3: WO 2010/069318 A1
Patent Document 4: US 2014/0288855 A1

Summary of the Invention

Problem to be Solved by the Invention

As mentioned above, the techniques disclosed in Patent Document 1 involve acquiring cumulative stress based on the parameters about the operating environment such as wind direction and wind velocity, or their converted or equivalent values. However, the parameters of the operating environment are generally characterized by their often low data sampling frequency. This makes it difficult to estimate remaining life, for example, with high accuracy given such data. There have also been disclosed, as in Patent Document 2, techniques for measuring the stress or distortion exerted on the blades and estimating their life based on the cumulative measured data. The data such as stress generally has higher sampling frequency than the parameters about the operating environment for example, and is more suited for use in estimating parameters like remaining life with high accuracy. However, it is often the case that information such as distortion is not obtained from the existing windmills. It is thus desired that parameters such as the remaining life of the existing windmills be acquired from operational and environmental information as accurately as from the information about distortion.
It is therefore an object of the present invention to provide a computing system capable of estimating parameters such as remaining life with high accuracy from operational and environmental information, a wind power generating system, and a method of calculating the remaining life or the fatigue damage quantity of a windmill.

Means for Solving the Problem

To achieve the above-described object, there may be adopted, for example, the structures described in the appended claims of this application. This application includes multiple means for achieving the above-described object, one such means being a computing system for acquiring a remaining life or a fatigue damage quantity of a windmill rotated by wind. The computing system includes a computing device configured to acquire relations between only operational or environmental information about the windmill on the one hand and the remaining life or the fatigue damage quantity of a predetermined member included in the windmill on the other hand. The relations are obtained by use of distortion information about the windmill and structural information about the windmill is used to calculate the distortion information regarding a position about which the distortion information is not measured.

As another means for achieving the above-described object, there is provided a wind power generating system including the computing system and the windmill.

As still another means for achieving the above-described object, there is provided a method of calculating the remaining life or the fatigue damage quantity of a windmill rotated by wind. The method includes acquiring, by use of distortion information about the windmill, relations between only operational or environmental information about the windmill on the one hand and the remaining life or the fatigue damage quantity of a predetermined member included in the windmill on the other hand.

Effect of the Invention

The present invention thus provides a computing system capable of estimating parameters such as remaining life with high accuracy from operational and environmental information, a wind power generating system, and a method of calculating the remaining life or the fatigue damage quantity of a windmill. Other objects, features and advantages of the invention will become more apparent upon a reading of the following description and appended drawings.

Brief Description of Drawings

FIG. 1 is a perspective view showing an entire construction of a wind power generating unit that is common throughout embodiments of the present invention.

FIG. 2 is a schematic diagram of structures inside a nacelle of the wind power generating unit common throughout the embodiments of the present invention.

FIG. 3 is a block diagram of devices and a database necessary for remaining life estimation in particular, the devices and database constituting part a first typical structure implemented in conjunction with a method of estimating remaining life as one embodiment of the present invention.

FIG. 4 is a block diagram of the functional sections in a device as part of the first typical structure implemented in conjunction with the method of estimating remaining life as one embodiment of the present invention.

FIG. 5 is a schematic diagram showing a typical method of analyzing the relations between measured and unmeasured values of a tower as part of the first typical structure implemented in conjunction with the method of estimating remaining life as one embodiment of the present invention.

FIG. 6 is a schematic diagram showing another typical method of analyzing the relations between measured and unmeasured values of the tower as part of the first typical structure implemented in conjunction with the method of estimating remaining life as one embodiment of the present invention.

FIG. 7 is a schematic diagram showing a typical method of analyzing the relations between measured and unmeasured values of a blade as part of the first typical structure implemented in conjunction with the method of estimating remaining life as one embodiment of the present invention.

FIG. 8 is a graphic representation showing typical indications of the estimated remaining life of a part of the first typical structure implemented in conjunction with the method of estimating remaining life as one embodiment of the present invention.

FIG. 9 is a graphic representation showing different typical indications of the estimated remaining life of parts of the first typical structure implemented in conjunction with the method of estimating remaining life as one embodiment of the present invention.

FIG. 10 is a tabular view listing the estimated cumulative fatigue damage of parts of the first typical structure implemented in conjunction with the method of estimating remaining life as one embodiment of the present invention.

FIG. 11 is another tabular view listing the estimated cumulative fatigue damage of parts of the first typical structure implemented in conjunction with the method of estimating remaining life as one embodiment of the present invention.

FIG. 12 is a schematic diagram showing a monitoring period for the data used in estimating the remaining life of parts of the first typical structure implemented in conjunction with the method of estimating remaining life as one embodiment of the present invention.

Modes for Carrying Out the Invention

Preferred embodiments of the present invention are described below with reference to the accompanying drawings.

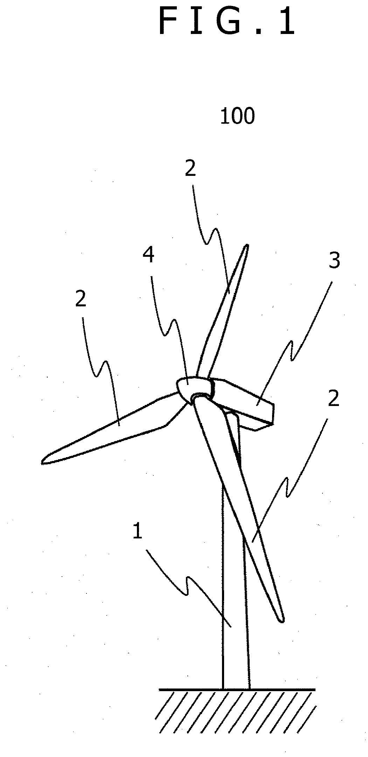

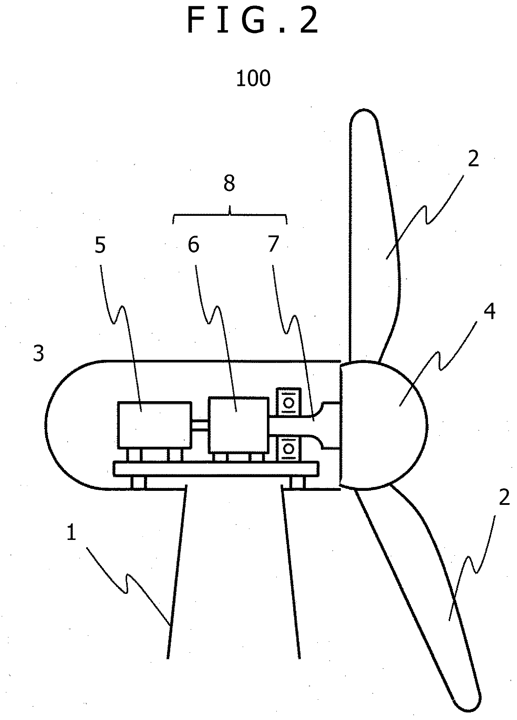

First, a typical configuration of a wind power generating unit 100 embodying the present invention is described with reference to FIGS. 1 and 2. The wind power generating unit 100 shown in FIGS. 1 and 2 is configured with such primary structures as three blades 2 that receive the wind, a nacelle 3, a hub 4 that attaches the blades 2 to the nacelle 3, and a tower 1 that supports the nacelle 3. Disposed inside the nacelle 3 are a main shaft 7 coupled to the hub 4 for integrally rotating therewith, a speed increasing gear 6 coupled to the main shaft 7, and a generator 5 driven by shaft output of the speed increasing gear 6. The main shaft 7 and the speed increasing gear 6 in combination may be called a drive train 8 or a power train because they play the role of transmitting the power or the rotational energy generated by the blades 2 to the generator (not shown).

The representative members contained in the windmill include such structures as a tower, blades, and a power train. The most effective way to measure the remaining live of these structures with high accuracy is by structural health monitoring (SHM) that involves measuring their distortion with a suitable sampling frequency. With distortion sensors attached to a target portion for remaining life evaluation, the distortion of the windmill structures caused by wind or by waves is measured in waveforms through structural health monitoring. Stress waveforms are calculated from the measured distortion waveforms and the remaining life is obtained accordingly. This method is more direct in calculating remaining life than methods using other physical quantities. The existing windmills, particularly those which started operating in earlier years, tend to be deprived of measurement systems for structural health monitoring.

On the other hand, the scheme of supervisory control and data acquisition (SCADA) has been adapted to almost all commercial windmills. As mentioned above, diverse physical quantities such as wind velocity, wind direction, power generation amount, generator revolutions, and temperature are measured with a view to suitably controlling the windmill under the known environmental and operational conditions. For that purpose, the sampling frequency of supervisory control and data acquisition is approximately 1 Hz. In many cases, measured values are used as the basis for calculating statistical values such as maximum value, minimum value, mean value, and standard deviation over a period of 10 minutes, the calculated values being stored in a data recording device. Wind velocity and wind direction are generally measured as part of supervisory control and data acquisition, so that they are usually sampled with the sampling frequency of about 1 Hz. To predict the remaining life of the windmill structures, the sampling frequency should preferably be 20 to 100 Hz, as has been adopted for supervisory control and data acquisition. Given the physical quantities that constitute measurement items of supervisory control and data acquisition, it is difficult to estimate the remaining life with high accuracy.

The invention explained below using preferred embodiments envisages combining the environmental and operational data about a windmill measured with the relatively low sampling frequency, with distortion information measured with the relatively high sampling frequency, for use in estimating with high accuracy the remaining life of the windmill originally equipped with a low sampling frequency measurement system. The inventors have noticed that the information typified by distortion information has higher sampling frequencies than environmental and operational data and is more suitable for estimating remaining life, for example, with high accuracy. One effective, but not the only, way to aim at higher accuracy is by separating the parameters about the operating environment from the information obtained with higher sampling frequencies than these parameters. As will be discussed in the ensuing detailed description, environmental data and operational data may be used in combination. Alternatively, either environmental data or operational data may be utilized alone while the other data may be left unused. On a windmill originally deprived of the measurement system for structural health monitoring, it is also possible to determine the relations of the remaining life of the windmill to its environmental and operational data obtained through structural health monitoring, by use of the distortion information about the windmill acquired over a predetermined period of structural health monitoring, for example. Once the relations are determined, the remaining life can be estimated from the environmental data or the operational data alone. In other words, after the relations of the remaining life to the environmental and operational data are determined, the remaining life can be estimated by the same scheme as that involving distortion information measurement, without actually measuring the distortion information. This eliminates the chore of having to measure distortion information every time remaining life is to be estimated. Using the relations makes it possible to estimate with high accuracy the remaining life of a windmill equipped solely with a low sampling frequency measurement system. The environmental or operational data may obtained directly by measurement or indirectly by calculation using other measured values. In place of distortion information, stress may be used to determine the relations of remaining life to environmental or operational data. However, stress information can be converted, and is often calculated, from distortion information. Thus, in either way, the distortion information is considered to be used.

Environmental and operational data may be measured with the relatively low frequency through supervisory control and data acquisition (SCADA) for example, and distortion information may be measured with the relatively high frequency through structural health monitoring (SHM) for example.

In addition to environmental or operational data and distortion information, it is possible to use the structure shapes and materials of the tower, blades, or drive train of the windmill as the basis for estimating their remaining life. In particular, the remaining life of the tower, blades, or drive train of a windmill originally deprived of the measurement system for structural health monitoring (SHM) can be estimated by use of the structure shapes and materials of these components.

Incidentally, the term "remaining life" is not limited in meaning to the time period up to reaching a level immediately declared a failure, for example. Remaining life may also be interpreted to be the time period leading up to the time of maintenance in reference to predetermined criteria.

Embodiments

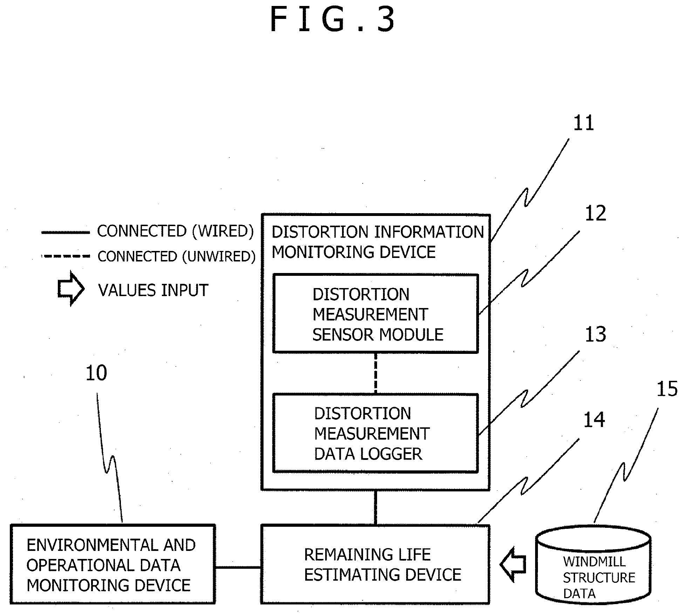

Described below with reference to FIGS. 3 to 12 are specific methods of estimating remaining life, for example, as some preferred embodiments of the present invention. Although the ensuing paragraphs will use examples of estimating remaining life for explanation purposes, this is not limitative of the present invention. The invention can be applied alternatively to those other parameters including (cumulative) fatigue damage quantity which are used for the same purpose as remaining life.

FIG. 3 is a block diagram of devices and a database as part of a wind power generating unit having the function of estimating the remaining life of its structures, the devices and database being needed particularly for remaining life estimation and shown schematically along with the relations therebetween.

An environmental and operational data monitoring device 10 measures environmental data and operational data about the windmill. The environmental data about the windmill includes data about the environment to which the windmill is exposed, such as wind velocity and wind direction. In the case of a windmill installed offshore, the environmental data about the windmill may include oceanographic data such as wave length and wave height in addition to wind condition data such as wind velocity and wind direction. The operational data about the windmill includes its power generation amount, the rotational speed of the generator, azimuth angle, and nacelle angle, for example. Because the environmental data and operational data about the windmill are used for windmill control, they constitute data items to be measured in the category of supervisory control and data acquisition (SCADA). For this reason, the environmental and operational data monitoring device 10 may be replaced with, but obviously not limited by, a supervisory control and data acquisition (SCADA) system. The environmental and operational data monitoring device 10 is made up of a server, a monitor, an uninterruptible power source, and a client personal computer (PC), for example. Although the environmental and operational data monitoring device 10 and a remaining life estimating device 14 are shown connected to each other by wire in FIG. 3, they may also be interconnected wirelessly by Wi-Fi (registered trademark), for example. Where there is no wired or wireless connection, the environmental and operational data may be input to the remaining life estimating device 14 via an easy-to-carry data storage medium such as a portable hard disk drive (HDD).

A distortion information monitoring device 11 measures the distortion incurred in the windmill structures such as the tower 1 and blades 2 in FIG. 1 and the drive train 8 in FIG. 2. Because the distortion data is measured with a view to evaluating the soundness of the windmill structures, the data constitutes an item to be measured in the category of structural health monitoring (SHM).

Structural health monitoring (SHM) involves measuring the distortion of such windmill structures as the tower, blades, and drive train with a view to evaluating their soundness. The measured values obtained through such monitoring are used to acquire values of the parameters that serve as indexes of structural soundness. The parameter values are monitored to see if they are at levels indicative of a stable windmill operation. In particular, a windmill set up on a landscape conducive to complicated wind behavior is subject to wind- or wave-induced loads that vary in a complex manner. This makes it important to ascertain that the stress values obtained from the distortion of the structures and their fatigue damage quantity or remaining life are within the ranges assumed at the time of design. The stress incurred in the structures and their fatigue damage quantity and remaining life are the parameters that serve as indexes of structural soundness. To calculate the fatigue damage quantity and remaining life of the structures, it is necessary to measure their distortion with a sampling frequency high enough to grasp stress waveforms caused by load changes. Thus in may cases of structural health monitoring, the distortion of the structures is measured with sampling frequencies of 20 to 100 Hz.

The distortion information monitoring device 11 is made up of a distortion measurement sensor module 12 and a distortion measurement data logger 13. As shown in FIG. 3, the distortion measurement sensor module 12 and the distortion measurement data logger 13 are interconnected wirelessly in accordance with a wireless standard such as Wi-Fi (registered trademark), Zigbee (registered trademark), or Bluetooth (registered trademark). Such wireless connection facilitates configuring a distortion measurement system on an already completed, existing windmill. The wirelessly connectable distortion measurement sensor module 12 may be configured with distortion sensors and a wireless transceiver. For example, the distortion sensor may be a common distortion sensor that measures distortion-induced changes in electrical resistance and converts the measured changes into a distortion amount. As another example, the distortion sensor may be a supersensitive, low-power-consumption semiconductor sensor that utilizes the piezoresistance effect of a semiconductor material. If it is difficult to power the distortion measurement sensor module 12 with an external power source, the distortion measurement sensor module 12 may be arranged to include batteries in addition to the distortion sensors and wireless transceiver. If batteries are used to power the sensor module 12, low-power-consumption semiconductor distortion sensors may be used to configure a battery-operated distortion information monitoring device 11 capable of taking measurements for an extended period of time.

Where the distortion measurement sensor module 12 and the distortion measurement data logger 13 are to be interconnected wirelessly, the distortion measurement data logger 13 may be constituted by a wireless aggregation device and a control PC, for example. The wireless aggregation device has the function of receiving measurement data transmitted wirelessly from the distortion measurement sensor module 12 and forwarding the received measurement data to the control PC by wire, for example.

In addition to the function of saving the measurement data, the control PC should preferably have the function of changing the settings of the distortion measurement sensor module 12 and the wireless aggregation device. Although the distortion information monitoring device 11 is shown connected to a remaining life estimating device 14 by wire in FIG. 3, the two devices may also be interconnected wirelessly by Wi-Fi (registered trademark), for example. Alternatively, the distortion data measured by the distortion information monitoring device 11 may be input to the remaining life estimating device 14 via an information recording medium such as an easy-to-carry portable hard disk drive (HDD).

Where the distortion measurement sensor module 12 is connected by wire to the distortion measurement data logger 13, a terminal box having a controller area network (CAN) communication capability may be disposed near the distortion measurement sensor module 12, the terminal box transmitting data to the distortion measurement data logger 13 by CAN communication. In such a case, a data recording PC may be used as the distortion measurement data logger 13. The data recording PC has the functions of collecting and saving data, of making various settings necessary for data recording, of communicating with the distortion measurement sensor module 12 and the terminal box, and of controlling these components.

Input to the remaining life estimating device 14 are the environmental and operational data measured by the environmental and operational data monitoring device 10 and the distortion data measured by the distortion information monitoring device 11, the devices being connected in wireless or wired fashion. Also input to the remaining life estimating device 14 are the structure shapes and materials of the windmill structures such as the tower 1, blades 2, and drive train 8. The information about the structure shapes and materials of the windmill structures are obtained from their drawings and specifications and other relevant documents, for example. In the case of an existing windmill whose detailed structure shapes and materials are not available from the relevant documents, the structure shapes and materials can be obtained by measurement. For the setup in FIG. 3, the values representing the structure shapes and materials are assumed to be input through an input screen provided by the remaining life estimating device 14 for input purposes. Alternatively, a database of windmill structure data 15 may be created. The database may then be connected to the remaining life estimating device 14 so that the values representative of the structure shapes and materials may be retrieved from the database and input automatically to the remaining life estimating device 14.

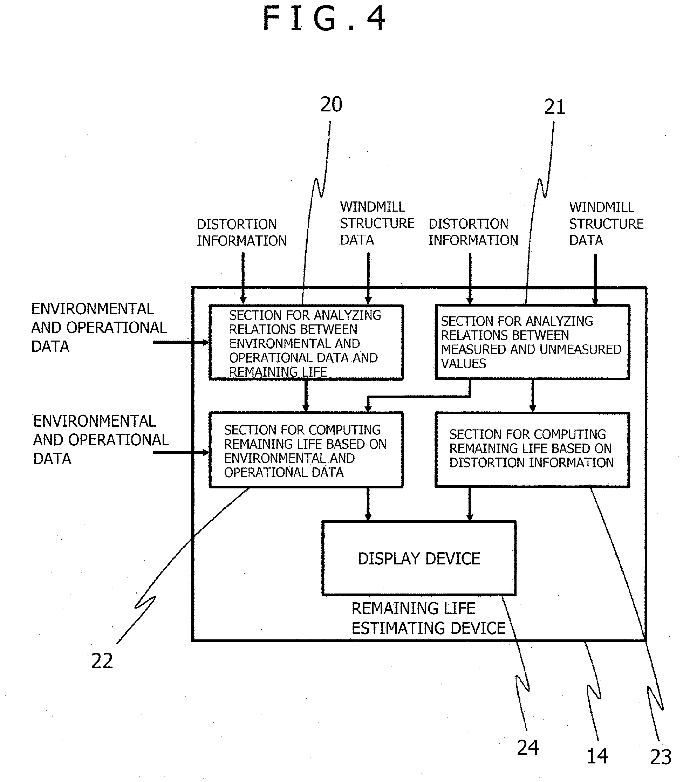

FIG. 4 is a block diagram schematically showing the functions provided by the remaining life estimating device 14. The remaining life estimating device 14 has four functions represented by a section 20 for analyzing relations between environmental and operational data and remaining life, a section 21 for analyzing relations between measured and unmeasured values, a section 22 for computing remaining life based on environmental and operational data, and a section 23 for computing remaining life based on distortion information. The remaining life estimating device 14 also has a display device 24 for displaying the result of remaining life estimation. The remaining life estimating device 14 operates as a computing system for acquiring the remaining life of the windmill, for example. Inside the remaining life estimating device 14 is at least one computing device that implements the four functions represented by the above-mentioned four sections 20 to 23. The section 20 determines the relations between environmental and operational data and remaining life by use of the environmental and operational data measured by the environmental and operational data monitoring device 10 and the distortion information measured by the distortion information monitoring device 11. An aerodynamic elasticity analyzing program used for windmill design typically has the functions of accepting the input of environmental and operational data as well as windmill structure data, of calculating loads on a plurality of positions of the windmill from the input data, and of calculating stress, fatigue damage quantity and remaining life, for example, from the calculated loads. Distortion information is input to the remaining life estimating device 14 from the distortion information monitoring device 11. Using the input distortion information, the remaining life estimating device 14 can identify highly indeterminate parameters included in an analysis model adopted by the windmill aerodynamic elasticity analyzing program (e.g., parameters included in a wind turbulence model). Identifying the parameters by use of the distortion information allows the windmill aerodynamic elasticity analyzing program to be used in accurately computing the relations between operational and environmental data and remaining life.

Given the environmental and operational data, it is possible to create a function expression for obtaining loads, stress, a statistical amount of loads (e.g., stress frequency distribution), fatigue damage quantity, or remaining life, for example. The indeterminate parameters included in the above function expression are then identified using the distortion information acquired from the distortion information monitoring device 11. The remaining life can also be estimated highly accurately from the environmental and operational data through the use of the function expression that adopts the parameters identified by the above method.

The section 21 for analyzing relations between measured and unmeasured values, shown in FIG. 4, calculates the stress at unmeasured positions using the distortions measured by the distortion information monitoring device 11 and the windmill structure data 15. Where there is no environmental or operation data about the windmill, the section 21 provides the function of estimating the remaining life of the windmill structures using solely the distortion information.

Specific example in which the stress at unmeasured positions of the tower is estimated

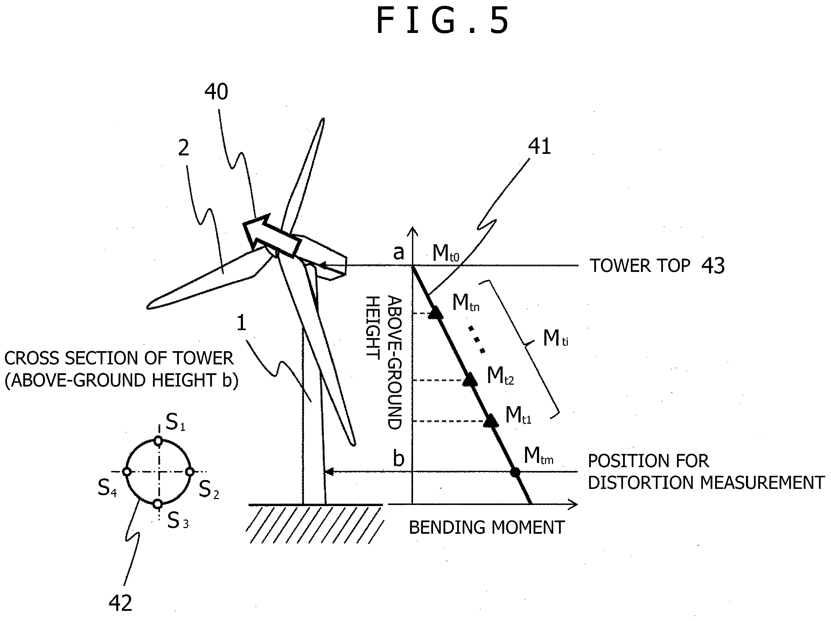

FIG. 5 schematically shows an example in which the section 21 for analyzing relations between measured and unmeasured values is used to estimate the stress of unmeasured positions on the windmill tower 1. Because the three blades 2 of the windmill receive the wind (the nacelle 3 supporting the blades 2 is coupled to the tower 1), a top 43 of the tower 1 is subjected to a concentrated load 40. A bending moment distribution 41 generated in the tower 1 by the concentrated load 40 occurs linearly in the tower height direction as shown in FIG. 5, according to the inventors' findings. Since the load exerted on the tower 1 comes mostly from the concentrated load 40, it is possible to assume as 0 the value of the bending moment Mt0 at the top 43 of the tower 1. According to the inventors' findings, distortion sensors attached to one position of the tower 1 different from its top 43 (at a height b in FIG. 5) may be used to calculate a bending moment Mtm of that position, the calculated moment being used to find a linearly distributed bending moment. In this manner, the bending moment distribution 41 in the height direction of the tower 1 can be obtained by connecting Mt0 and Mtm with a straight line. Although this embodiment is explained using an example in which distortion sensors are attached to one position in view of the linearity of bending moment, this merely indicates that sensors attached to at least one position are sufficient. Sensors attached to a plurality of positions are also acceptable. While the above example is primarily focused on the top 43 of the tower 1, that is because the blades 2 receiving the wind load are attached to the tower top 43. Thus the top 43 may be interpreted to be the fulcrum of the load of the blades 2 exerted on the tower 1.

In a tower cross section 42 at the height b, at least four distortion sensors S1, S2, S3 and S4 are attached to different positions in a circumferential direction in order to calculate the bending moment Mtm.

The distortion sensors S1 and S3 are attached to different positions 180 degrees apart in the circumferential direction, in a manner disposed diagonally across the center of the tower cross section 42. Likewise, the distortion sensors S2 and S4 are also attached to different positions 180 degrees apart in the circumferential direction. If $\varepsilon1$ to $\varepsilon4$ are assumed to represent the distortions measured respectively by the distortion sensors S1 to S4, a bending moment Mtm1 to be calculated from the distortion sensors S1 and S3 and a bending moment Mtm2 to be computed from the distortion sensors S2 and S4 are given by the following expressions:

$$\text{Mtm1} = 0.5 \times (\varepsilon1 - \varepsilon3) \times E \times Zt \quad\quad \dots (1)$$

$$\text{Mtm2} = 0.5 \times (\varepsilon2 - \varepsilon4) \times E \times Zt \quad\quad \dots (2)$$

where, E denotes the longitudinal elasticity modulus of the material used in the tower 1, and zt stands for the section modulus of the tower cross section 42. From the bending moments Mtm1 and Mtm2, it is possible to calculate the bending moment Mtm shown in FIG. 5 at a given angle in the circumferential direction of the tower cross section 42. When the bending moment distribution 41 is obtained from the bending moments Mtm and Mt0, it is possible to calculate bending moments (Mt1, Mt2 and Mtn in FIG. 5) defined at the same circumferential angle as the moment Mtm at given heights of the tower 1. Further, given the bending moment Mti (i=1 to n), the following expression may be used to calculate stress $\sigma$ti at the height of the bending moment Mti:

$$\sigma\text{ti} = \text{Mti}/Z\text{ti} \quad\quad \dots (3)$$

where, Zti represents the section modulus of the tower 1 at the height at which the bending moment Mti is calculated.

In many cases, a large-sized windmill has its tower formed by having a plurality of segments welded together in the height direction. If the stress $\sigma ti$ is calculated at a height of the tower 1 that is largely free from the stress concentrated near a welded part of the tower 1 due to shape changes in the welded part, then the fatigue damage and remaining life of the welded part can be evaluated by referring to the stress $\sigma ti$ and to the data about the material used in the tower 1.

Also, if the bending moment $Mti$ is calculated at the height of a flange part of the tower 1, it is possible to calculate the stress generated in the bolts used to fasten the flange part, by utilizing the bending moment $Mti$ and the information about the shape and material of the flange part included the windmill structure data 15. The fatigue damage and remaining life of the bolts in the flange part of the tower 1 can be evaluated by referring to the stress generated in these bolts of the tower 1 and to the data about the bolt material.

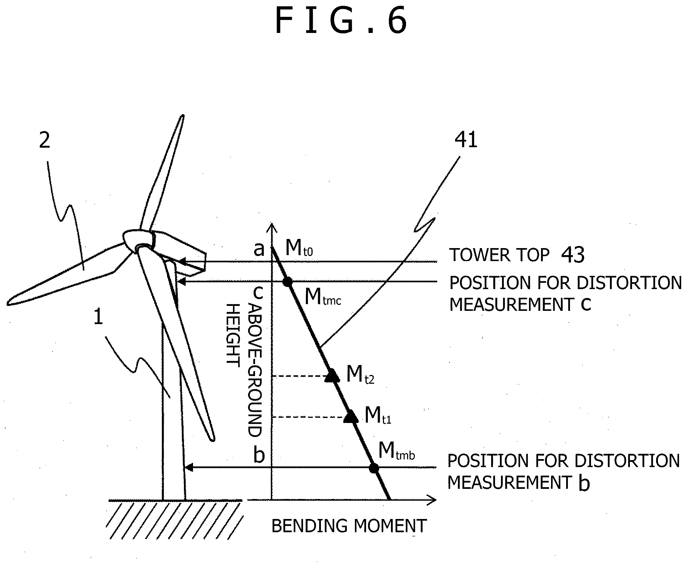

FIG. 6 schematically shows a method of estimating the distortion of unmeasured positions on the windmill tower 1 by use of the section 21 for analyzing relations between measured and unmeasured positions of distortion, the method being different from that in FIG. 5. The method in FIG. 5 involves the distortion information monitoring device 11 having distortion sensors attached to one position in the height direction of the tower 1. By contrast, the method in FIG. 6 is an example that involves having distortion sensors attached to two different positions (at heights b and c in FIG. 6) in the height direction of the tower 1. In this example, the bending moment distribution 41 is obtained from bending moments $Mtmb$ and $Mtmc$ calculated from the values of the distortion sensors attached to the heights b and c of the tower 1. Although this embodiment is explained using an example in which distortion sensors for sensing bending moment are attached to two positions, this is not limitative of the present invention. Distortion sensors attached to more than two positions are also acceptable.

Given the above observations, the following three points should preferably be taken into consideration when distortion sensors are to be attached to the tower 1:

(1) Distortion sensors should be attached to a height different from that of the fulcrum of the load of the blades 2 on the tower 1. This makes it possible to take measurements at a position where the value of the bending moment is large.

(2) Where the tower 1 is formed by having a plurality of segments welded together in the height direction, distortion sensors should be disposed near a welded part of the tower 1. More specifically, distortion sensors should preferably be attached to a height-direction position of the tower 1 that is largely free from the stress concentrated near a welded part of the tower 1 due to shape changes in the welded part.

(3) Distortion sensors should be attached to the height-direction position of a flange part in the tower 1. In this case, the stress generated in the bolts used to fasten the flange part may be calculated by use of the information about the shape and material of the flange part. In the calculation, reference is made to the stress generated in the bolts of the flange part in the tower 1 and to the data about the bolt material.

Specific examples in which the stress of unmeasured positions of the blade is estimated

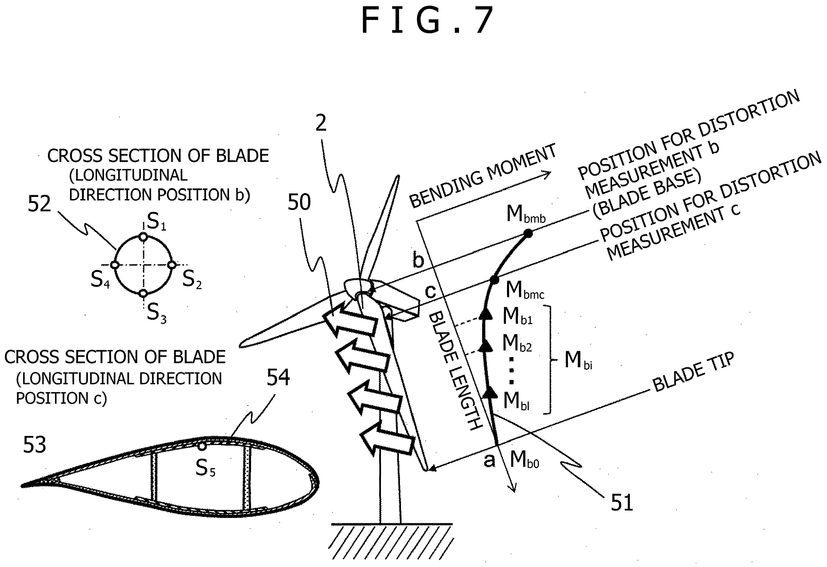

FIG. 7 schematically shows a typical method of estimating the stress of unmeasured positions on a windmill blade 2, by use of the section 21 for analyzing relations between measured and unmeasured values. The winds exerted on the blade 2 are distributed in the length (or longitudinal) direction. That means a bending moment distribution 51 caused by a distributed load 50 on the blade 2 approximates a quadratic function of the blade length. In particular, where the winds exerted on the blade 2 are distributed uniformly in the longitudinal direction, the distributed load 50 is uniformly distributed. Thus the bending moment distribution 51 constitutes the quadratic function of the blade length. If the bending moment distribution 51 is equal or close to the quadratic function of the blade length, it is possible to approximate the bending moment distribution 51 using that quadratic function. To obtain the quadratic bending moment distribution 51 requires bending moments at three different points in the length direction of the blade 2. Since the bending moment $Mb0$ at the blade tip (a in FIG. 7) is 0, it is necessary to calculate bending moments at two other different points in the length direction. Bending moments are calculated using distortion sensors attached to at least two different positions in the length direction of the blade 2. The calculation provides the bending moment distribution 51 of the blade 2. FIG. 7 shows an example in which bending movements $Mmb$ and $Mmc$ are calculated using distortion sensors attached to a base of the blade 2 (b in FIG. 7) and a position (c in FIG. 7) at a certain distance from the base. The bending moments $Mb0$, $Mmb$ and $Mmc$ thus obtained from three different positions in the blade length direction can be used as the basis for acquiring the bending moment distribution 51.

To calculate the bending moment $Mmb$ of the base of the blade 2, at least four distortion sensors S1, S2, S3 and S4 are attached to different positions in the circumferential direction of a blade base cross section 52. The method of disposing the distortion sensors S1 to S4 in the circumferential direction and of calculating the bending moment $Mmb$ from distortion measurements may be the same as the method of attaching distortion sensors to the tower 1 for bending moment calculation. Optical fiber-equipped distortion sensors are sometimes attached to the base of the blades 2 in order to control the blade pitch angle. In such a case, the bending moment $Mmb$ of the blade base may be obtained from the output of the optical fiber-equipped distortion sensors. If distortion sensors are attached to a different position in the longitudinal direction of the blade 2 away from its tip, the bending moment can be measured in a more pronounced manner.

To calculate the bending moment Mmc at the length position c of the blade 2, at least one distortion sensor S5 is attached to a spar cap 54 in a blade cross section 53. The bending moment Mmc may be calculated by the following expression using a constant C defined by the material and structure shape of the blade 2:

$$Mmc = C \times S5 \qquad \ldots (4)$$

When the bending moment distribution 51 of the blade 2 is obtained, a bending moment Mbi at a given longitudinal position of the blade 2 is acquired accordingly. From the bending moment Mbi thus acquired, the stress generated in the blade 2 is calculated using the following expression:

$$\sigma bi = Mbi/Zbi \qquad \ldots (5)$$

where, Zbi denotes the section modulus of the blade 2 at the blade length position at which the bending moment Mbi has been calculated. The section modulus of the blade 2 is found in the windmill structure data 15. As is evident from the bending moment distribution 51, a large bending moment is exerted on the base of the blade 2. The stress generated in the bolts used in a bolt-fastened part of the blade base may be calculated by use of the bending moment Mmb exerted on the base of the blade 2 and of information about that bolt-fastened part included in the windmill structure data 15.

Specific example in which the stress of unmeasured positions in the drive train is estimated

In the case of the drive train 8, the load (force, bending moment) exerted on the main shaft 7 is calculated from the distortion of the blades 2 and of the tower 1 collected by the distortion information monitoring device 11. The calculated load is then used to devise a physical model of the drive train 8 by which the stress at various locations of the drive train 8 is obtained. The calculation of unmeasured stress targeted for the drive train 8 is also one of the functions provided by the section 21 for analyzing relations between measured and unmeasured values. That is, the relation analyzing section 21 obtains the stress of unmeasured positions of the tower 1, blades 2, and drive train 8 for example, by use of the distortion information and the windmill structure data.

Specific display examples

The remaining life and other parameters obtained as described above need to be displayed on a screen, for example, for acknowledgement. Explained below are some preferred specific examples in which the remaining life and other parameters acquired by the above methods embodying the invention are displayed. Obviously, these display examples are not limitative of the present invention.

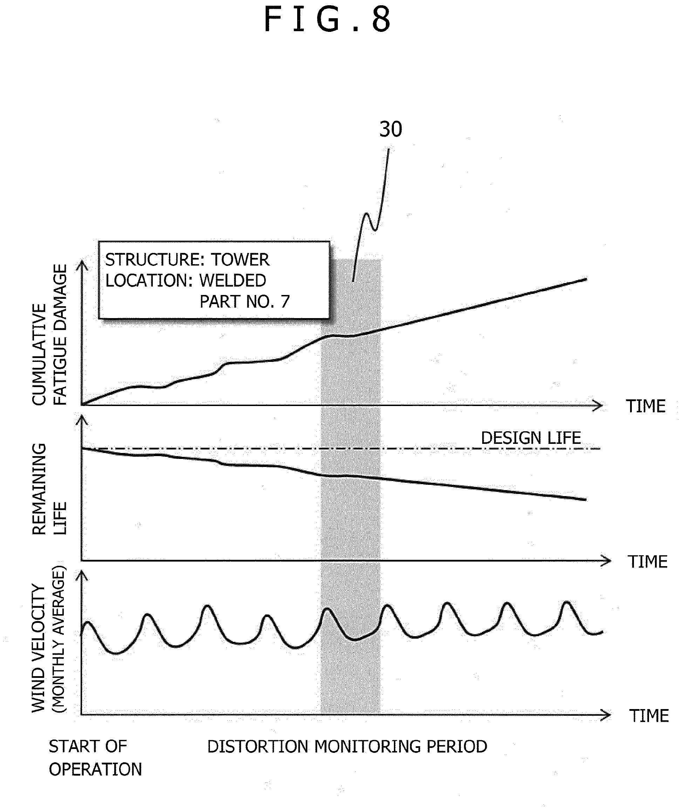

FIG. 8 shows a typical screen of the display device 24 displaying remaining life transition estimated by use of environmental and operational data as well as distortion information about the windmill. FIG. 8 indicates time changes in cumulative fatigue damage and in remaining life graphically on horizontal and vertical axes, the horizontal axis representing elapsed time since the start of operation, the vertical axis denoting cumulative values of fatigue damage quantity and remaining life obtained by the section 22 for computing remaining life based on environmental and operational data or by the section 23 for computing remaining life based on distortion information inside the remaining life estimating device 14. The screen of the display device 24 is shown displaying side by side cumulative fatigue damage estimates and remaining life estimates regarding a welded part (e.g., welded part No. 7) of the windmill tower 1. When time changes in cumulative fatigue damage and in remaining life are displayed juxtaposed with time changes in environmental data about the windmill (e.g., wind velocity in FIG. 8), it is possible to understand visually the relations between fatigue damage quantity and remaining life on the one hand and the environment in which the windmill is installed on the other hand. If time changes in, for example, operational data about the windmill (e.g., power generation amount) in place of the time changes in wind velocity are displayed juxtaposed with the time changes in cumulative fatigue damage and in remaining life on the display device 24, it is possible to understand visually the relations between fatigue damage quantity and remaining life on the one hand and the operational status of the windmill on the other hand.

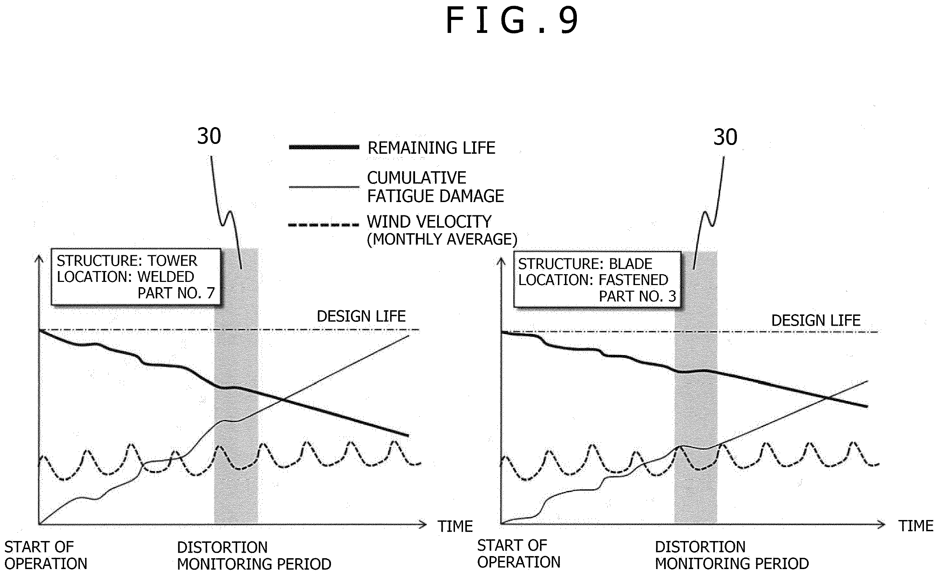

FIG. 9 shows a different typical screen of the display device 24 displaying remaining life transition estimated by use of environmental and operational data as well as distortion information about the windmill. When fatigue damage quantity estimates and remaining life estimates of not one but a plurality of parts of a given structure in the windmill are displayed juxtaposed on the display device 24, it is possible to verify visually and comparatively whether the fatigue damage tendencies of the parts involved are identical and how fast their fatigue damage has progressed.

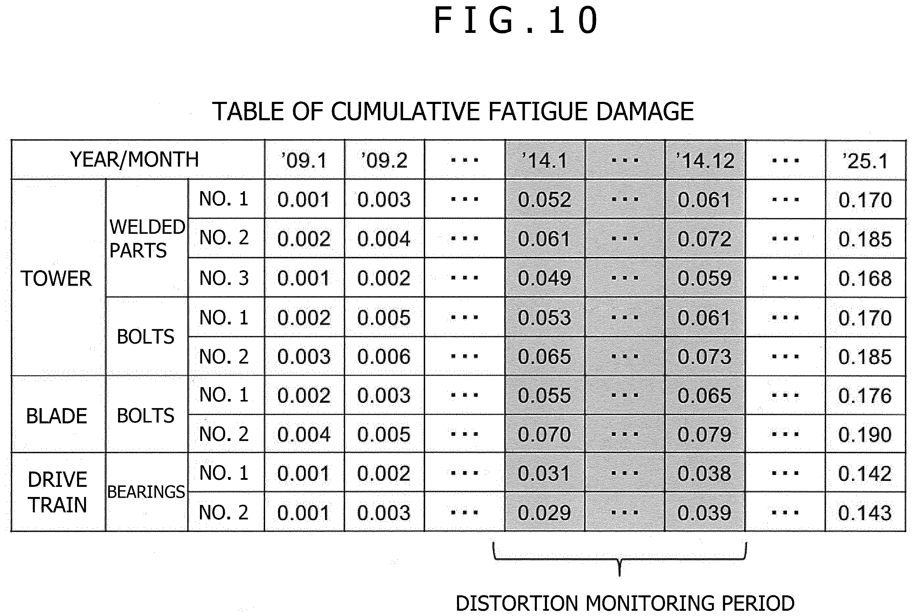

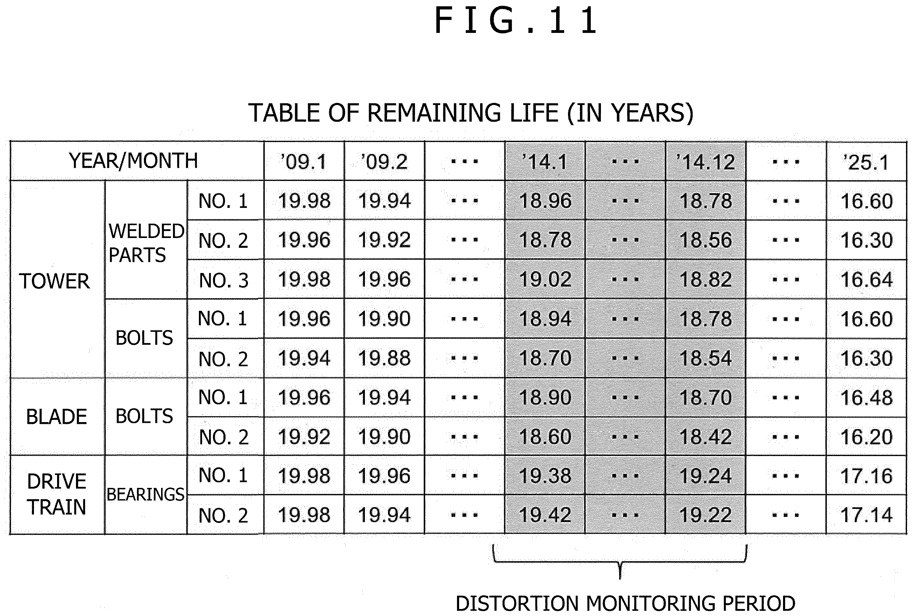

FIGS. 10 and 11 show how cumulative fatigue damage estimates and remaining life estimates are typically displayed in tabular form on the display device 24, the estimates being made by use of environmental and operation data as well as distortion information about the windmill. When the screen of the display device 24 displays simultaneously in tabular form the cumulative fatigue damage estimates and remaining life estimates obtained from a plurality of parts included in the windmill structures, it is possible to compare easily these multiple parts in terms of cumulative fatigue damage and remaining life.

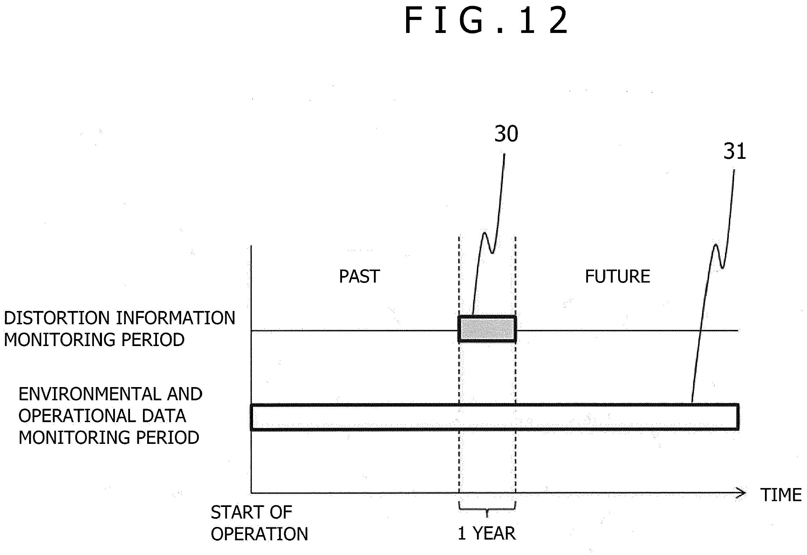

FIG. 12 schematically shows a typical monitoring period for data to be obtained by the environmental and operational data monitoring device 10 and by the distortion information monitoring device 11. Distortion information is monitored by the distortion information monitoring device 11 over a one-year distortion monitoring period 30. This monitoring is performed so that the relations between environmental and operational data and remaining life may be determined by the relation analyzing section 20 in the remaining life estimating device 14 handling environmental and operational data. Considering the one-year periodicity of the winds and the ocean, this example assumes the distortion monitoring period 30 to be one year. If the distortion monitoring period 30 is set to be longer than one year, the relations between environmental and operational data and remaining life can be determined more accurately. That means remaining life can be estimated more accurately than when the distortion monitoring period 30 lasts one year. Where distortion information monitoring is difficult to perform for a year due to cost constraints for example, the distortion monitoring period 30 may fall short of one year. Still, distortion information can be used to improve the accuracy in predicting remaining life even if the distortion monitoring period 30 is shorter than one year.

FIG. 12 shows that an environmental and operational data monitoring period 31 for the environmental and operational data monitoring device 10 is set to span the entire operating period from the start of windmill operation and into the future. If the environmental and operational data can be monitored over the entire operating period, it is possible to estimate remaining life at a given point in time from past to future, i.e., from the start of operation into the future in accordance with the environmental and operation data at that point in time.

The estimation of remaining life by use of the environmental and operational data is performed by the section 22 for computing remaining life based on environmental and operational data inside the remaining life estimating device 14 shown in FIG. 4. The remaining life computing section 22 estimates remaining life using the analysis model for the windmill aerodynamic elasticity analyzing program as well as relational expressions, the analysis model being determined by the section 20 for analyzing relations between environmental and operational data and remaining life. Where it is difficult to monitor environmental and operational data over the entire operating period, the remaining life computing section 22 in the remaining life estimating device 14 can still interpolate remaining life in the past or in the future by use of the environmental and operational data acquired during the monitoring period 31.

Meanwhile, in the course of the distortion monitoring period 30, the section 21 for analyzing relations between measured and unmeasured values inside the remaining life estimating device 14 can calculate the stress of unmeasured positions. The calculated stress of unmeasured positions allows the section 23 for computing remaining life based on distortion information inside the remaining life estimating device 14 to compute fatigue damage quantity and remaining life. The remaining life computing section 23 cannot estimate the fatigue damage quantity and remaining life reflecting the environmental and operational data from the past or in the future. Still, on the assumption that the tendency of fatigue damage in the past or in the future is substantially the same as the tendency of fatigue damage during the distortion monitoring period 30, the remaining life computing section 23 can calculate fatigue damage quantity and remaining life at a given point in the past or in the future.

Where the section 20 for analyzing relations between environmental and operational data and remaining life provides a relational expression involving environmental and operation data as well as the load or stress exerted on a given part of a windmill structure, interpolative relations found by the section 21 for analyzing relations between measured and unmeasured values are input to the section 22 for computing remaining life based on environmental and operational data. Thus even if the relational expression of environmental and operation data and of load or stress is applicable only to a certain part, the fatigue damage quantity and remaining life of a desired part can be estimated by use of the above-mentioned interpolative relations.

Reference Signs List

    1: Tower
    2: Blade
    3: Nacelle
    4: Hub
    5: Generator

6: Speed increasing gear
7: Main shaft
8: Drive train
11: Distortion information monitoring device
12: Distortion measurement sensor module
13: Distortion measurement data logger
14: Remaining life estimating device
15: Windmill structure data
20: Section for analyzing relations between environmental and operational data and remaining life
21: Section for analyzing relations between measured and unmeasured values
22: Section for computing remaining life based on environmental and operational data
23: Section for computing remaining life based on distortion information
24: Display device
30: Distortion information monitoring period
31: Environmental and operational data monitoring period
40: Concentrated load
41: Bending moment distribution of tower
42: Tower cross section
50: Distributed load
51: Bending moment distribution of blade
52: Blade cross section (base)
53: Blade cross section (at position away from base)
54: Spar cap
100: Wind power generating unit

**Claims**

1. A computing system for acquiring a remaining life or a fatigue damage quantity of a windmill rotated by wind, the computing system (14) comprising a computing device (20, 21, 22) configured to acquire relations between only operational or environmental information about the windmill on the one hand and the remaining life or the fatigue damage quantity of a predetermined member included in the windmill on the other hand, the relations being acquired by use of distortion information about the windmill, wherein structural information about the windmill is used to calculate the distortion information regarding a position about which the distortion information is not measured.

2. The computing system according to claim 1, wherein the remaining life or the fatigue damage quantity of the windmill is estimated by use of the operational information or the environmental information.

3. The computing system according to claim 2, wherein the distortion information is not measured when the remaining life or the fatigue damage quantity of the windmill is estimated.

4. The computing system according to any one of claims 1 to 3, wherein the distortion information is acquired over at least a one-year period.

5. The computing system according to any one of claims 1 to 4, further comprising a display device (24) configured to display the remaining life or the fatigue damage quantity of the windmill.

6. A wind power generating system comprising the computing system (14) according to any one of claims 1 to 5 and the windmill.

7. The wind power generating system according to claim 6, wherein:

    the windmill includes a blade (2) rotated by wind, a tower (1) for supporting a load of the blade (2) directly or indirectly, and a drive train (8) for transmitting energy generated by revolutions of the blade (2); and
    the structural information about the windmill includes information related to a shape or a material of at least one of the blade (2), the tower (1), or the drive train (8).

8. The wind power generating system according to claim 7, further comprising a distortion sensor disposed at a height different from the height of a fulcrum of the load of the blade (2) exerted on the tower (1).

9. The wind power generating system according to claim 7 or 8, wherein:

the tower (1) is formed by having a plurality of segments welded together in a height direction; and
a distortion sensor is disposed near a welded part of the tower (1).

10. The wind power generating system according to any one of claims 7 to 9, wherein:

the tower (1) has a flange part; and
a distortion sensor is attached to the flange part.

11. The wind power generating system according to any one of claims 7 to 10, further comprising distortion sensors attached to at least two different positions of the blade in a longitudinal direction thereof away from a tip of the blade (2).

12. A method of computing a remaining life or a fatigue damage quantity of a windmill rotated by wind to generate power, the method comprising the step of acquiring relations between only operational or environmental information about the windmill on the one hand and the remaining life or the fatigue damage quantity of a predetermined member included in the windmill on the other hand, the relations being acquired by use of distortion information about the windmill,
wherein structural information about the windmill is used to calculate the distortion information regarding a position about which the distortion information is not measured.

13. The method of computing a remaining life or a fatigue damage quantity of a windmill according to claim 12, wherein the remaining life or the fatigue damage quantity of the windmill is estimated by use of the acquired relations and the operational information or the environmental information.

14. The method of computing a remaining life or a fatigue damage quantity of a windmill according to claim 13, wherein the distortion information is not measured when the remaining life or the fatigue damage quantity of the windmill is estimated.

**Patentansprüche**

1. Rechensystem zum Erfassen einer verbleibenden Lebensdauer oder eines Ermüdungsschadenbetrags einer Windkraftanlage, die durch Wind gedreht wird, wobei
das Rechensystem (14) eine Rechenvorrichtung (20, 21, 22) umfasst, die konfiguriert ist, Beziehungen lediglich zwischen Betriebsinformationen oder Umgebungsinformationen über die Windkraftanlage einerseits und der verbleibenden Lebensdauer oder des Ermüdungsschadenbetrags eines in der Windkraftanlage enthaltenen vorgegebenen Elements andererseits zu erfassen,
die Beziehungen unter Verwendung von Verformungsinformationen über die Windkraftanlage erfasst werden und Strukturinformationen über die Windkraftanlage verwendet werden, um die Verformungsinformationen hinsichtlich einer Position, von der die Verformungsinformationen nicht gemessen werden, zu berechnen.

2. Rechensystem nach Anspruch 1, wobei die verbleibenden Lebensdauer oder der Ermüdungsschadenbetrag der Windkraftanlage unter Verwendung der Betriebsinformationen oder der Umgebungsinformationen geschätzt werden.

3. Rechensystem nach Anspruch 2, wobei die Verformungsinformationen nicht gemessen werden, wenn die verbleibende Lebensdauer oder der Ermüdungsschadenbetrag der Windkraftanlage geschätzt wird.

4. Rechensystem nach einem der Ansprüche 1 bis 3, wobei die Verformungsinformationen über mindestens einen Zeitraum von einem Jahr erfasst werden.

5. Rechensystem nach einem der Ansprüche 1 bis 4, das ferner eine Anzeigevorrichtung (24) umfasst, die konfiguriert ist, die verbleibende Lebensdauer oder den Ermüdungsschadenbetrag der Windkraftanlage anzuzeigen.

6. Windkrafterzeugungssystem, das das Rechensystem (14) nach einem der Ansprüche 1 bis 5 und die Windkraftanlage umfasst.

7. Windkrafterzeugungssystem nach Anspruch 6, wobei
die Windkraftanlage ein Rotorblatt (2), das durch Wind gedreht wird, einen Turm (1), um eine Last des Rotorblatts (2) direkt oder indirekt zu tragen, und einen Antriebsstrang (8) zum Übertragen von Energie, die durch Umdrehungen des Rotorblatts (2) erzeugt wird; und
die Strukturinformationen über die Windkraftanlage Informationen in Bezug auf eine Form oder ein Material des Rotorblatts (2) und oder des Turms (1) und/oder des Antriebsstrangs (8) enthalten.

8. Windkrafterzeugungssystem nach Anspruch 7, das ferner einen Verformungssensor umfasst, der bei einer Höhe angeordnet ist, die von der Höhe eines Drehpunkts der Last des Rotorblatts (2), die auf den Turm (1) ausgeübt wird, verschieden ist.

9. Windkrafterzeugungssystem nach Anspruch 7 oder 8, wobei
der Turm (1) durch Zusammenschweißen mehrerer Segmente in Höhenrichtung gebildet ist; und
ein Verformungssensor in der Nähe eines geschweißten Teils des Turms (1) angeordnet ist.

10. Windkrafterzeugungssystem nach einem der Ansprüche 7 bis 9, wobei der Turm (1) einen Flanschteil besitzt und ein Verformungssensor am Flanschteil angebracht ist.

11. Windkrafterzeugungssystem nach einem der Ansprüche 7 bis 10, das ferner Verformungssensoren umfasst, die bei mindestens zwei verschiedenen Positionen des Rotorblatts in seiner Längsrichtung entfernt von einer Spitze des Rotorblatts (2) angebracht sind.

12. Verfahren zum Berechnen einer verbleibenden Lebensdauer oder eines Ermüdungsschadenbetrags einer Windkraftanlage, die durch Wind gedreht wird, um Leistung zu erzeugen, wobei
das Verfahren den Schritt des Erfassens von Beziehungen lediglich zwischen Betriebsinformationen oder Umgebungsinformationen über die Windkraftanlage einerseits und der verbleibenden Lebensdauer oder des Ermüdungsschadenbetrags eines in der Windkraftanlage enthaltenen vorgegebenen Elements andererseits, wobei die Beziehungen unter Verwendung von Verformungsinformationen über die Windkraftanlage erfasst werden, und Strukturinformationen über die Windkraftanlage verwendet werden, um die Verformungsinformationen hinsichtlich einer Position, wovon die Verformungsinformationen nicht gemessen werden, zu berechnen.

13. Verfahren zum Berechnen einer verbleibenden Lebensdauer oder eines Ermüdungsschadenbetrags einer Windkraftanlage nach Anspruch 12, wobei die verbleibende Lebensdauer oder der Ermüdungsschadenbetrag der Windkraftanlage unter Verwendung der erfassten Beziehungen und der Betriebsinformationen oder der Umgebungsinformationen geschätzt werden.

14. Verfahren zum Berechnen einer verbleibenden Lebensdauer oder eines Ermüdungsschadenbetrags einer Windkraftanlage nach Anspruch 13, wobei die Verformungsinformationen nicht gemessen werden, wenn die verbleibende Lebensdauer oder der Ermüdungsschadenbetrag der Windkraftanlage geschätzt werden.

**Revendications**

1. Système informatique pour acquérir une durée de vie restante ou une quantité d'endommagement par fatigue d'une éolienne mise en rotation par le vent,
le système informatique (14) comprenant un dispositif de calcul (20, 21, 22) configuré pour acquérir des relations entre des informations uniquement opérationnelles ou environnementales concernant l'éolienne d'une part et la durée de vie restante ou la quantité d'endommagement par fatigue d'un organe prédéterminé inclus dans l'éolienne d'autre part,
les relations étant acquises en utilisant une information de distorsion concernant l'éolienne, dans lequel
une information structurelle concernant l'éolienne est utilisée pour calculer l'information de distorsion concernant une position autour de laquelle l'information de distorsion n'est pas mesurée.

**2.** Système informatique selon la revendication 1,
dans lequel la durée de vie restante ou la quantité d'endommagement par fatigue de l'éolienne est estimée en utilisant l'information opérationnelle ou l'information environnementale.

**3.** Système informatique selon la revendication 2,
dans lequel l'information de distorsion n'est pas mesurée quand la durée de vie restante ou la quantité d'endommagement par fatigue de l'éolienne est estimée.

**4.** Système informatique selon l'une quelconque des revendications 1 à 3, dans lequel l'information de distorsion est acquise sur au moins une période d'une année.

**5.** Système informatique selon l'une quelconque des revendications 1 à 4, comprenant en outre un dispositif d'affichage (24) configuré pour afficher la durée de vie restante ou la quantité d'endommagement par fatigue de l'éolienne.

**6.** Système de génération d'énergie éolienne comprenant le système informatique (14) selon l'une quelconque des revendications 1 à 5 et l'éolienne.

**7.** Système de génération d'énergie éolienne selon la revendication 6, dans lequel :

l'éolienne inclut une pale (2) mise en rotation par le vent, une tour (1) pour supporter une charge de la pale (2) directement ou indirectement, et un train d'entraînement (8) pour transmettre l'énergie générée par les rotations de la pale (2) ; et
l'information structurelle concernant l'éolienne inclut une information en relation avec une forme ou un matériau d'un organe au moins parmi la pale (2), la tour (1), ou le train d'entraînement (8).

**8.** Système de génération d'énergie éolienne selon la revendication 7, comprenant en outre un capteur de distorsion disposé à une hauteur différente de la hauteur d'un pivot de la charge de la pale (2) exercée sur la tour (1).

**9.** Système de génération d'énergie éolienne selon la revendication 7 ou 8, dans lequel :

la tour (1) est formée en prévoyant une pluralité de segments soudés ensemble dans une direction en hauteur ; et
un capteur de distorsion est disposé à proximité d'une partie soudée de la tour (1).

**10.** Système de génération d'énergie éolienne selon l'une quelconque des revendications 7 à 9, dans lequel :

la tour (1) comprend une partie en forme de bride ; et
un capteur de distorsion est attaché sur la partie en forme de bride.

**11.** Système de génération d'énergie éolienne selon l'une quelconque des revendications 7 à 10, comprenant en outre des capteurs de distorsion attachés à au moins deux positions différentes de la pale dans une direction longitudinale de celle-ci en éloignement d'une extrémité de la pale (2).

**12.** Procédé pour calculer une durée de vie restante ou une quantité d'endommagement par fatigue d'une éolienne mise en rotation par le vent pour générer une énergie,
le procédé comprenant l'étape consistant à acquérir des relations entre des informations uniquement opérationnelles ou environnementales concernant l'éolienne d'une part et la durée de vie restante ou la quantité d'endommagement par fatigue d'un organe prédéterminé inclus dans l'éolienne d'autre part, les relations étant acquises en utilisant une information de distorsion concernant l'éolienne,
dans lequel une information structurelle concernant l'éolienne est utilisée pour calculer l'information de distorsion concernant une position autour de laquelle l'information de distorsion n'est pas mesurée.

**13.** Procédé pour calculer une durée de vie restante ou une quantité d'endommagement par fatigue d'une éolienne selon la revendication 12, dans lequel la durée de vie restante ou la quantité d'endommagement par fatigue de l'éolienne est estimée en utilisant les relations acquises et l'information opérationnelle ou l'information environnementale.

**14.** Procédé pour calculer une durée de vie restante ou une quantité d'endommagement par fatigue d'une éolienne selon la revendication 13, dans lequel l'information de distorsion n'est pas mesurée quand la durée de vie restante ou la quantité d'endommagement par fatigue de l'éolienne est estimée.

# FIG.1

100

2

4

2

3

2

1

# F I G . 2

100

# F I G . 3

CONNECTED (WIRED)
CONNECTED (UNWIRED)
VALUES INPUT

DISTORTION INFORMATION
MONITORING DEVICE — 11

DISTORTION
MEASUREMENT
SENSOR MODULE — 12

DISTORTION
MEASUREMENT
DATA LOGGER — 13

10

ENVIRONMENTAL AND
OPERATIONAL DATA
MONITORING DEVICE

REMAINING LIFE
ESTIMATING DEVICE — 14

WINDMILL
STRUCTURE
DATA — 15

# FIG.4

20                                          21

DISTORTION   WINDMILL      DISTORTION   WINDMILL
INFORMATION  STRUCTURE     INFORMATION  STRUCTURE
             DATA                       DATA

ENVIRONMENTAL
AND OPERATIONAL
DATA

| SECTION FOR ANALYZING<br>RELATIONS BETWEEN<br>ENVIRONMENTAL AND<br>OPERATIONAL DATA AND<br>REMAINING LIFE | SECTION FOR ANALYZING<br>RELATIONS BETWEEN<br>MEASURED AND UNMEASURED<br>VALUES |

ENVIRONMENTAL
AND OPERATIONAL
DATA

| SECTION FOR COMPUTING<br>REMAINING LIFE BASED ON<br>ENVIRONMENTAL AND<br>OPERATIONAL DATA | SECTION FOR COMPUTING<br>REMAINING LIFE BASED ON<br>DISTORTION INFORMATION |

DISPLAY DEVICE

REMAINING LIFE
ESTIMATING DEVICE

22

24      14      23

F I G . 5

# FIG.6

EP 3 093 486 B1

# FIG.7

CROSS SECTION OF BLADE
(LONGITUDINAL DIRECTION POSITION b)

52

CROSS SECTION OF BLADE
(LONGITUDINAL DIRECTION POSITION c)

53

54

50

2

BENDING MOMENT

POSITION FOR DISTORTION MEASUREMENT b (BLADE BASE)

POSITION FOR DISTORTION MEASUREMENT c

$M_{bmb}$

$M_{bmc}$

$M_{b1}$

$M_{b2}$

$M_{bi}$

$M_{bl}$

$M_{b0}$

BLADE LENGTH

BLADE TIP

51

$S_1$ $S_2$ $S_3$ $S_4$ $S_5$

EP 3 093 486 B1

# FIG.8

30

STRUCTURE: TOWER
LOCATION: WELDED
PART NO. 7

CUMULATIVE FATIGUE DAMAGE

TIME

REMAINING LIFE

DESIGN LIFE

TIME

WIND VELOCITY (MONTHLY AVERAGE)

TIME

START OF OPERATION

DISTORTION MONITORING PERIOD

# FIG.9

**Legend:**
— REMAINING LIFE
— CUMULATIVE FATIGUE DAMAGE
- - - - WIND VELOCITY (MONTHLY AVERAGE)

**Left graph:**
30

STRUCTURE: TOWER
LOCATION: WELDED
PART NO. 7

DESIGN LIFE

START OF OPERATION

DISTORTION MONITORING PERIOD

TIME

**Right graph:**
30

STRUCTURE: BLADE
LOCATION: FASTENED
PART NO. 3

DESIGN LIFE

START OF OPERATION

DISTORTION MONITORING PERIOD

TIME

EP 3 093 486 B1

# F I G . 1 0

## TABLE OF CUMULATIVE FATIGUE DAMAGE

| YEAR/MONTH | | | '09.1 | '09.2 | ・・・ | '14.1 | ・・・ | '14.12 | ・・・ | '25.1 |
|---|---|---|---|---|---|---|---|---|---|---|
| TOWER | WELDED PARTS | NO. 1 | 0.001 | 0.003 | ・・・ | 0.052 | ・・・ | 0.061 | ・・・ | 0.170 |
| | | NO. 2 | 0.002 | 0.004 | ・・・ | 0.061 | ・・・ | 0.072 | ・・・ | 0.185 |
| | | NO. 3 | 0.001 | 0.002 | ・・・ | 0.049 | ・・・ | 0.059 | ・・・ | 0.168 |
| | BOLTS | NO. 1 | 0.002 | 0.005 | ・・・ | 0.053 | ・・・ | 0.061 | ・・・ | 0.170 |
| | | NO. 2 | 0.003 | 0.006 | ・・・ | 0.065 | ・・・ | 0.073 | ・・・ | 0.185 |
| BLADE | BOLTS | NO. 1 | 0.002 | 0.003 | ・・・ | 0.055 | ・・・ | 0.065 | ・・・ | 0.176 |
| | | NO. 2 | 0.004 | 0.005 | ・・・ | 0.070 | ・・・ | 0.079 | ・・・ | 0.190 |
| DRIVE TRAIN | BEARINGS | NO. 1 | 0.001 | 0.002 | ・・・ | 0.031 | ・・・ | 0.038 | ・・・ | 0.142 |
| | | NO. 2 | 0.001 | 0.003 | ・・・ | 0.029 | ・・・ | 0.039 | ・・・ | 0.143 |

DISTORTION MONITORING PERIOD

EP 3 093 486 B1

# FIG.11

## TABLE OF REMAINING LIFE (IN YEARS)

| YEAR/MONTH | | | '09.1 | '09.2 | · · · | '14.1 | · · · | '14.12 | · · · | '25.1 |
|---|---|---|---|---|---|---|---|---|---|---|
| TOWER | WELDED PARTS | NO. 1 | 19.98 | 19.94 | · · · | 18.96 | · · · | 18.78 | · · · | 16.60 |
| | | NO. 2 | 19.96 | 19.92 | · · · | 18.78 | · · · | 18.56 | · · · | 16.30 |
| | | NO. 3 | 19.98 | 19.96 | · · · | 19.02 | · · · | 18.82 | · · · | 16.64 |
| | BOLTS | NO. 1 | 19.96 | 19.90 | · · · | 18.94 | · · · | 18.78 | · · · | 16.60 |
| | | NO. 2 | 19.94 | 19.88 | · · · | 18.70 | · · · | 18.54 | · · · | 16.30 |
| BLADE | BOLTS | NO. 1 | 19.96 | 19.94 | · · · | 18.90 | · · · | 18.70 | · · · | 16.48 |
| | | NO. 2 | 19.92 | 19.90 | · · · | 18.60 | · · · | 18.42 | · · · | 16.20 |
| DRIVE TRAIN | BEARINGS | NO. 1 | 19.98 | 19.96 | · · · | 19.38 | · · · | 19.24 | · · · | 17.16 |
| | | NO. 2 | 19.98 | 19.94 | · · · | 19.42 | · · · | 19.22 | · · · | 17.14 |

DISTORTION MONITORING PERIOD

# FIG.12

**EP 3 093 486 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010079685 A
- JP 2004301030 A
- WO 2010069318 A1
- US 20140288855 A1